# EUROPEAN PATENT SPECIFICATION

(11) **EP 2 868 560 B1**
(45) Date of publication and mention of the grant of the patent: **21.02.2018**
(21) Application number: 14190389.8
(22) Date of filing: 27.10.2014
(51) Int. Cl.: B62K 11/14, B62K 23/02

(54) **Saddle type vehicle**
Motorrad
Véhicule à selle

(30) Priority: 31.10.2013 JP 2013227012
(43) Date of publication of application: 06.05.2015
(73) Proprietor: Yamaha Hatsudoki Kabushiki Kaisha, Iwata-shi, Shizuoka 438-8501 (JP)
(72) Inventor: Yagi, Toshiki, Iwata-shi, Shizuoka 438-8501 (JP); Watanabe, Takashi, Iwata-shi, Shizuoka 438-8501 (JP); Makino, Kazuyuki, Iwata-shi, Shizuoka 438-8501 (JP)
(74) Representative: Grünecker Patent- und Rechtsanwälte PartG mbB

(56) References cited:
- EP-A1- 1 323 955
- EP-A2- 1 129 937
- EP-A2- 1 582 452
- WO-A2-2007/130360
- GB-A- 2 321 682
- US-A- 4 710 599
- US-A1- 2005 274 562
- US-A1- 2006 248 975

## Description

The present invention relates to a saddle type vehicle including an input device provided to a handlebar unit.

Conventionally, a saddle type vehicle such as a motorcycle includes a switch device (an input device) located in the vicinity of a grip of a handlebar unit. The switch device is provided with an operation member configured to be operated with a finger which is not used to grip the grip, while the grip is gripped.

For the switch device of the saddle type vehicle, a variety of operation members have been devised. Examples of these include a push operation member and a slide operation member, as described in Japanese Unexamined Patent Publication No. 2013-028294. The examples further include a rotary operation member as is described in European Patent No. 1508480. Further, US 4710599 A shows the preamble of claim 1.

The switch device (input device) is provided to the handlebar unit. Therefore it is required that the operation member of the switch device has good operability while avoiding interference with the handlebar unit.

In view of the above, an object of the present invention is to provide a saddle type vehicle including an input device having good operability while avoiding interference with a handlebar unit. Such an object is achieved by a saddle type vehicle according to claim 1.

A saddle type vehicle according to the invention is defined by claim 1 and includes: a handlebar unit provided forward of a seat in a vehicle forward/rearward direction, the seat held by a vehicle body frame; a left grip portion and a right grip portion respectively provided on a left end portion and a right end portion of the handlebar unit; and an input device provided to the handlebar unit, the input device configured to be operable with a palmar side of a thumb of a hand gripping one of the left grip portion and the right grip portion. The input device includes: a case; and a rotating body including an operational surface arranged in a circumferential direction, a portion of which is accommodated in the case and a remaining portion of which is exposed to an outside of the case, the rotating body being rotatable about an axis extending in a longitudinal direction of the corresponding one of the grip portions by swinging the thumb of the hand gripping the one of the grip portions while the palmar side of the thumb is in contact with the portion of the operational surface which is exposed to the outside of the case.

In this structure, the input device includes the case, and the rotating body including the operational surface arranged in the circumferential direction, a portion of which is accommodated in the case and the remaining portion of which is exposed to the outside of the case, the rotating body being rotatable about the axis extending in the longitudinal direction of the grip portion. This rotating body is rotationally operated by swinging the thumb of the hand gripping the grip portion while the palmar side of the thumb is in contact with the portion of the operational surface which is exposed to the outside of the case.

Different rotational angles of the rotating body respectively correspond to different operation amounts to be input. This allows the rotating body to be used for a wider variety of input operations than a push or slide operation member, leading to its good operability.

Further, according to the present teaching, the rotating body is operated with the thumb, and this improves operability of the rotating body. The thumb is easily moved while the grip portion is gripped with other fingers (fingers other than the thumb among five fingers), and therefore suitable for operation of the rotating body.

However, since the input device is provided to the handlebar unit, it is necessary to avoid interference between the rotating body and the handlebar unit. Therefore, in the case where the rotating body is arranged alongside the handlebar unit, the rotating body having the rotation axis extending in the longitudinal direction of the grip portion is disposed in the vicinity of a part of the handlebar unit extending in the longitudinal direction of the grip portion. Accordingly, the larger the outer diameter of the rotating body is, the larger the distance between the handlebar unit and the portion of the operational surface which is exposed. Note that, in the case where the part of the handlebar unit passes through an inner portion of the rotating body, the outer diameter of the rotating body is larger than the outer diameter of the handlebar unit; however, the distance between the handlebar unit and the portion of the operational surface which is exposed to the outside of the case can be smaller than in the case where the rotating body is arranged alongside the handlebar unit.

While the grip portion is gripped with the fingers other than the thumb, it is easy to swing the thumb regardless of the distance between the distal end of the thumb and the handlebar unit. Therefore, irrespective of the distance between the operational surface and the handlebar unit, it is easy to operate the rotating body by swinging the thumb.

Further, the thumb is swung by pivoting the thumb about its third joint (the third joint from the tip of the thumb: CMC joint) located closer to the wrist, and therefore the angle of the range within which the thumb is swung is larger, but it is difficult to slightly move the thumb. Therefore, it would be better that the diameter of the operational surface (the outer diameter of the rotating body) is large to some extent to facilitate operation of the rotating body by swinging the thumb. In this regard, the input device has good operability while avoiding interference with the handlebar unit, according to the present teaching. Further, it is possible to increase the operation amount in each operation by increasing the circumferential length of the portion of the operational surface which is exposed to the outside of the case.

Note that, according to the present teaching, the axis extending in the longitudinal direction of the grip portion is an axis which falls within the range of plus-minus 45 degrees to the longitudinal direction of the grip portion.

Further, according to the present teaching and in this Specification, "to grip the grip portion" means that a rider seated on the seat of the saddle type vehicle grips the grip portion in a riding posture.

Further, according to the present teaching and in this Specification, "the hand gripping the grip portion" includes not only the case where an eminence at the base of the thumb (i.e., thenar) is in contact with the grip portion, but also the case where the thenar is not in contact with the grip portion.

Furthermore, according to the present teaching and in this Specification, "the thumb is in contact with the operational surface" includes not only the case where the operational surface is touched with a bare hand, but also the case where the operational surface is touched with a gloved hand.

In the saddle type vehicle of the present teaching, it is preferable that the input device includes a resistance applying unit configured to apply resistance to rotation of the rotating body.

It is difficult to slightly swing the thumb. Further, while the grip portion is gripped with the fingers other than the thumb, the thumb tends to be stiffened. Therefore, if no resistance is applied to the rotation of the rotating body, there is a possibility that the rotating body is rotated too much to slightly adjust the rotational angle of the rotating body. According to the present teaching, however, resistance is applied to the rotation of the rotating body by the resistance applying unit, and this makes it easier to slightly adjust the rotational angle of the rotating body, thereby improving operability of the rotating body.

In the saddle type vehicle of the present teaching, it is preferable that the resistance applying unit is configured to increase/decrease the resistance applied to the rotating body with respect to a rotation direction of the rotating body so that a click feeling is given to a rotational operation of the rotating body at intervals of a predetermined angle.

In this structure, the click feeling is given to the rotational operation of the rotating body at intervals of the predetermined angle, and this enables the rider to realize that the rotating body has been rotated the predetermined angle. This facilitates input operations in which a selected item is changed each time the rotating body is rotated the predetermined angle, for example. Further, the rotating body is easily rotated even though relatively larger resistance is applied to the rotating body since a larger force is exerted thereon by swinging the thumb. Therefore, a maximum value of the resistance applied to the rotating body may be increased, thereby to increase the increment/decrement (the difference between the maximum value and the minimum value) of the resistance applied to the rotating body. This provides a clearer click feeling to the rotational operation of the rotating body.

In the saddle type vehicle of the present teaching, it is preferable that, in the rotating body, a width of the operational surface in a direction of the axis extending in the longitudinal direction of the one of the grip portions is smaller than a length of the portion of the operational surface which is exposed to the outside of the case in a direction orthogonal to the width when viewed from a direction orthogonal to a plane directly connecting both circumferential ends of the portion of the operational surface which is exposed to the outside of the case.

Hereinafter, the length of the portion of the operational surface which is exposed to the outside of the case in the direction orthogonal to the width when viewed from the direction orthogonal to the plane directly connecting the both circumferential ends of the portion of the operational surface which is exposed to the outside of the case is referred to as a "linear length of the exposed portion of the operational surface". The longer linear length of the exposed portion of the operational surface allows the thumb to move widely to operate the rotating body, and this facilitates operation of the rotating body by swinging the thumb.

However, the increase in the linear length of the exposed portion of the operational surface increases the distance which the distal end of the thumb travels in the longitudinal direction of the grip portion as the thumb is swung. Therefore, if the width of the operational surface (the width in the direction of the axis extending in the longitudinal direction of the one of the grip portions) is large, it is more likely that the size of a contact area between the distal end of the thumb and the operational surface changes as the thumb is swung. A great change in the size of the contact area provides the rider with a feeling of strangeness, leading to poor usability. According to the present teaching, however, the width of the operational surface is smaller than the linear length of the exposed portion of the operational surface. The smaller width of the operational surface results in the smaller contact area between the distal end of the thumb and the operational surface. Thus, even if the linear length of the exposed portion of the operational surface is larger and the operation amount in each operation is larger, the change in the size of the contact area between the distal end of the thumb and the operational surface is smaller, leading to good usability.

Furthermore, the smaller contact area between the thumb and the operational surface results in a larger pressure per unit area on the contact area between the thumb and the operational surface. This helps the rider to realize which portion of the thumb contacts the operational surface, thereby further improving usability.

Moreover, the smaller width of the operational surface allows the rotating body to be installed in a smaller space. This helps the rotating body not interfere with the handlebar unit.

In the saddle type vehicle of the present teaching, it is preferable that: an entire outer circumferential surface of the rotating body forms the operational surface; and at least a part of each of both end surfaces of the rotating body, each of which crosses the longitudinal direction of the one of the grip portions, is exposed to the outside of the case.

In this structure, the entire outer circumferential surface of the rotating body forms the operational surface, and at least a part of each of the both end surfaces of the rotating body, each of which crosses the axis, is exposed to the outside of the case. This makes it possible to rotate the rotating body while the thumb is in contact with an edge of one of the both end surfaces of the rotating body (an edge of the operational surface). In this case, the pressure per unit area on the contact area between the thumb and the operational surface is larger than the case where the rotating body is rotated with the thumb surface-contacting the operational surface. This helps the rider to realize which portion of the thumb contacts the operational surface, thereby improving usability.

In the saddle type vehicle of the present teaching, it is preferable that the rotating body is arranged alongside the handlebar unit in a direction orthogonal to the longitudinal direction of the one of the grip portions.

In this structure, the rotating body is arranged alongside the handlebar unit in the direction orthogonal to the longitudinal direction of the one of the grip portions, and this offers greater flexibility to the location where the rotating body is provided than in the case where the handlebar unit passes through an inner portion of the rotating body. This allows the rotating body to be disposed at a location where the rotation body is operated more easily. In addition, the above structure increases the freedom in determining the size of the outer diameter of the rotating body, compared with the case where the handlebar unit passes through an inner portion of the rotating body.

In the saddle type vehicle of the present teaching, it is preferable that: the operational surface of the rotating body is an uneven surface on which recesses and projections are arranged alternately with each other in a swing direction in which the thumb of the hand gripping the one of the grip portions is swung; and a groove width of each recess in the swing direction is designed to enable an edge of the recess to be pushed with the thumb of the hand gripping the one of the grip portions.

In this structure, the groove width of each recess, which is formed on the operational surface, in the swing direction of the thumb of the hand gripping the grip portion (i.e., the groove width in the circumferential direction of the operational surface) is designed to enable an edge of the recess to be pushed with the thumb. Therefore, it is possible to rotate the rotating body by swinging the thumb while pushing the edge of the recess (or a surface defining the recess) with the thumb. The thumb is thus caught on the recess, and this prevents the thumb from slipping in the circumferential direction. This improves operability of the rotating body.

In the saddle type vehicle of the present teaching, it is preferable that a plurality of small recesses each having a groove width smaller than that of each of the recesses are formed on the operational surface of the rotating body.

In this structure, the plurality of small recesses each having the smaller groove width than that of each of the recesses are formed on the operational surface. Therefore, when the rotating body is rotated by swinging the thumb while the thumb is in contact with the operational surface, the small recesses prevent a slip of the thumb (the slip is not limited to a slip in the circumferential direction of the operational surface). This further improves operability of the rotating body.

In the saddle type vehicle of the present teaching, it is preferable that the rotating body is configured to be operable by pushing the rotating body with the thumb of the hand gripping the one of the grip portions in a predetermined direction orthogonal to the axis extending in the longitudinal direction of the one of the grip portions.

In this structure, the rotating body is operable not only through the rotational operation by swinging the thumb, but also through a pushing operation, and therefore three or more types of input operations are possible using the single rotating body.

In the saddle type vehicle of the present teaching, it is preferable that the portion of the operational surface which is exposed to the outside of the case is positioned rearward of a central axis of the one of the grip portions, assuming that a rearward direction is a direction from the palmar side to a nail of the thumb of the hand gripping the one of the grip portions, with the thumb extended in the longitudinal direction of the one of the grip portions.

Note that, according to the present teaching and in this Specification, the "direction from the palmar side to the nail of the thumb" refers to a direction from the palmar side to the nail of the thumb in a thickness direction of the thumb orthogonal to a longitudinal direction of the thumb and to a width direction of the thumb.

### BRIEF DESCRIPTION OF THE DRAWINGS

FIG. 1 is a side view of a motorcycle of a first preferred embodiment.
FIG. 2 is a view from a direction of an arrow A of FIG. 1.
FIG. 3 is a perspective view of a right grip portion and an input device with the periphery thereof.
FIG. 4 is a view of the right grip portion and the input device with the periphery thereof, viewed from a direction P of FIG. 3.
FIG. 5 is a view of the right grip portion and the input device with the periphery thereof, viewed from a direction orthogonal to the direction P of FIG. 3 and to a longitudinal direction of the right grip portion.
FIG. 6 is a side view of the input device, viewed from the longitudinal direction of the right grip portion.
FIG. 7 is a view of the input device operated by swinging a thumb.
FIG. 8 is a side view of an input device of a motorcycle of another preferred embodiment.
FIG. 9 is a side view of an input device of a motorcycle of another preferred embodiment.
FIG. 10 is a view of an input device of a motorcycle of another preferred embodiment, viewed from the direction P.
FIG. 11 is a view of an input device of a motorcycle of another preferred embodiment, viewed from the direction P.
FIG. 12 is a schematic sectional view of an input device of a motorcycle of another preferred embodiment.
FIG. 13 is a side view of an input device of a motorcycle of another preferred embodiment.
FIG. 14 is a view of an input device of a motorcycle of another preferred embodiment, viewed from the direction P.
FIG. 15 is a view of an input device of a motorcycle of another preferred embodiment, viewed from the direction P.

### DESCRIPTION OF THE PREFERRED EMBODIMENTS

The following describes an embodiment of a saddle type vehicle of the present teaching, with reference to a motorcycle 1, as an example.

<Overall Structure of Motorcycle>

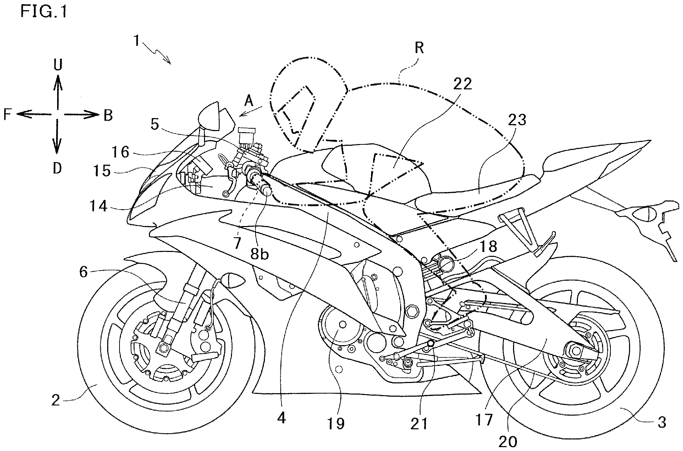

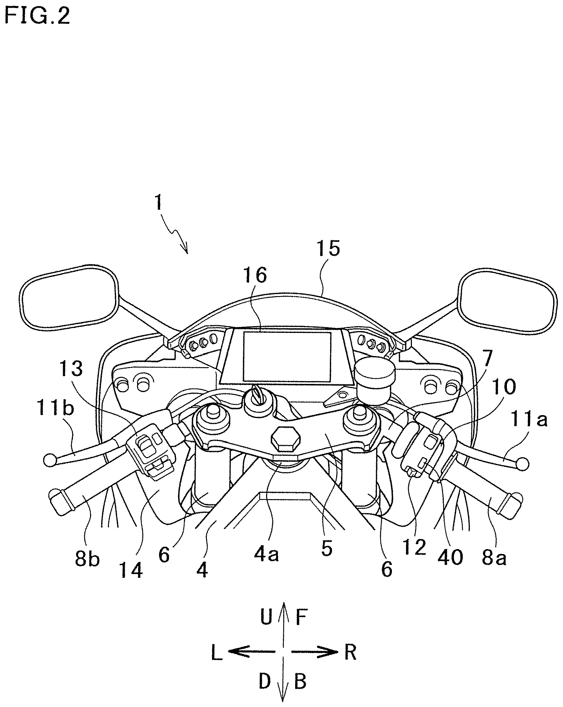

As shown in FIG. 1, the motorcycle 1 includes a front wheel 2, a rear wheel 3, and a vehicle body frame 4. Note that, in the following description for the overall structure of the motorcycle 1, a forward/rearward direction and a right/left direction are respectively a forward/rearward direction and a right/left direction, as seen from a rider R seated on a seat 23 (will be described later) of the motorcycle 1 (a vehicle forward/rearward direction and a vehicle right/left direction). An arrow F and an arrow B shown in FIG. 1 and FIGs. 2, 3, 5, and 6 which will be referred to later respectively indicate a forward direction and a rearward direction in the vehicle forward/rearward direction. Further, an arrow U and an arrow D shown in FIG. 1 and FIGs. 2 to 4 and 6 which will be referred to later respectively indicate an upward direction and a downward direction of the motorcycle 1. Furthermore, an arrow L and an arrow R shown in FIGs. 2 to 5 which will be referred to later respectively indicate a left direction and a right direction of the vehicle right/left direction. Note that, out of the arrows indicating the directions in each drawing of the present application, bold arrows indicate directions parallel to the surface of the sheet, and unbold arrows indicate directions not parallel to the surface of the sheet.

As shown in FIG. 2, a head pipe 4a is provided to a front portion of the vehicle body frame 4. In the head pipe 4a, a steering shaft (not shown) is rotatably inserted. A handle crown 5 is secured to an upper end of the steering shaft.

The handle crown 5 has right and left end portions, to which upper end portions of front forks 6 are respectively secured. Lower end portions of the front forks 6 support the front wheel 2. Each of the front forks 6 has a suspension (not shown) which absorbs shock in an up/down direction.

A handlebar unit 7 is secured to the upper end portions of the two front forks 6. The handlebar unit 7 includes two bars. One of the two bars included in the handlebar unit 7 extends left-down-rearward from the left end portion of the handle crown 5. The other bar extends right-down-rearward from the right end portion of the handle crown 5. The respective directions in which the bars of the handlebar unit 7 extend are not limited to those shown in FIGs. 1 and 2.

A right grip portion 8a and a left grip portion 8b are respectively attached to outer peripheries of a left end portion and a right end portion of the handlebar unit 7. Note that the left end portion of the handlebar unit 7 is a left end portion of the left bar, and the right end portion of the handlebar unit 7 is a right end portion of the right bar.

The right grip portion 8a is a throttle grip. To the right grip portion 8a, connected is throttle wire for adjusting the position of the throttle. Onto the handlebar unit 7, a throttle holder 10 accommodating the throttle wire is attached adjacent to the right grip portion 8a. Note that the throttle holder 10 does not have to be provided.

Further, a brake lever 11a is attached to a right portion of the handlebar unit 7, and a clutch lever 11b is attached to a left portion of the handlebar unit 7. To the brake lever 11a, a brake hose is connected. To the clutch lever 11b, clutch wire for turning on and off a clutch is connected.

To the right portion of the handlebar unit 7, an input device 12 is provided, while to the left portion of the handlebar unit 7, an input device 13 is provided. The input device 12 is located to the left of and adjacent to the throttle holder 10. The input device 13 is located to the right of and adjacent to the left grip portion 8b. Each of the input devices 12 and 13 is provided with a plurality of switches. The switches of each of the input devices 12 and 13 are operated by a thumb of a hand gripping corresponding one of the grip portions 8a and 8b. The input device 12 is provided with a switch 40 of a rotary type, and corresponds to an input device of the present teaching. The detailed structure of the input device 12 will be described later.

A headlight unit 14 is located higher than the front wheel 2 and forward of the handlebar unit 7. A front face of the headlight unit 14 is covered with a front cowling 15. At the top of the headlight unit 14, a display device 16 is disposed. The display device 16 is located forward of the handlebar unit 7.

A swingarm 17 is swingably held, at its front end portion, by a rear portion of the vehicle body frame 4. Rear end portions of the swingarm 17 hold the rear wheel 3. Each of rear suspensions 18 which absorb shock in the up/down direction connects a portion of the swingarm 17 which is not a swingarm pivot to the vehicle body frame 4.

Further, on the vehicle body frame 4, an engine 19 is mounted. Rearward of the engine 19, there is disposed a transmission (not shown) having a plurality of speed-changing gears. The driving power of the engine 19 is transmitted to the rear wheel 3 via the transmission and a chain 20. To the left of the transmission, there is provided a shift pedal 21 for changing the gears of the transmission.

Rearward of the handlebar unit 7, a fuel tank 22 and the seat 23 are attached to an upper portion of the vehicle body frame 4. The seat 23 is located rearward of the fuel tank 22. The fuel tank 22 and the seat 23 are located higher than the engine 19.

The motorcycle 1 further includes a not-shown controller configured to control operation of each part of the motorcycle 1. The controller is coupled to the throttle grip (the right grip portion) 8a, the input devices 12 and 13, and the like. The motorcycle 1 further includes a battery (not shown) which supplies power to electronic equipment such as the controller, the display device 16, and various sensors.

### <Structure of Input Device>

The following describes the detailed structure of the input device 12.

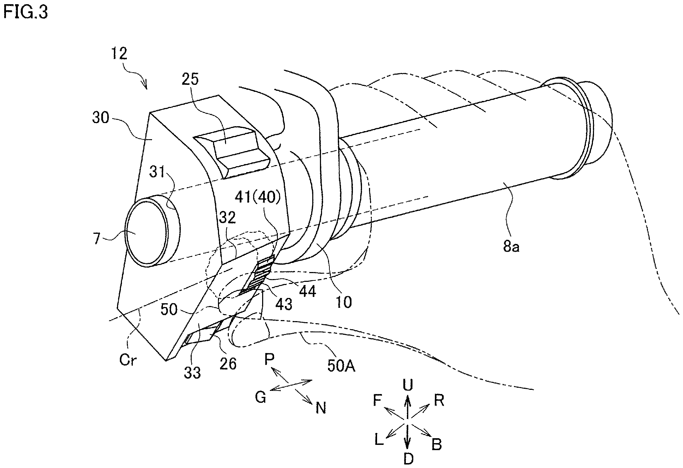

As shown in FIGs. 3 to 6, the input device 12 includes a case 30, a rotary push switch 40, a rocker switch 25, and a slide switch 26. The rotary push switch 40 is a switch operable through both operations of: a rotational operation in normal and reverse directions; and a pushing operation. The rocker switch 25 is a switch operable through the pushing operation. The slide switch 26 is a switch operable through a sliding operation. Note that either one or both of the rocker switch 25 and the slide switch 26 may be omitted from the input device 12. Further, instead of the rocker switch 25 or the slide switch 26, the input device 12 may include another switch.

The case 30 is attached to the outer periphery of the handlebar unit 7. The case 30 has a handlebar insertion hole 31 through which the handlebar unit 7 is inserted. A portion of the handlebar unit 7 which is located inside the case 30 extends in a direction substantially the same as a longitudinal direction G of the right grip portion 8a (the longitudinal direction is the direction of the length of the right grip portion 8a). Further, the case 30 has a box-like shape having two faces each substantially orthogonal to the longitudinal direction G of the right grip portion 8a.

The case 30 has, on its rear side with respect to the vehicle forward/rearward direction, an angular portion 32 protruding rearward in the vehicle forward/rearward direction. The angular portion 32 is located at substantially middle of the case 30 with respect to the up/down direction. Below the angular portion 32, a flat surface 33 is formed. The flat surface 33 is inclined with respect to the up/down direction so that the flat surface 33 extends downward and forward in the vehicle forward/rearward direction.

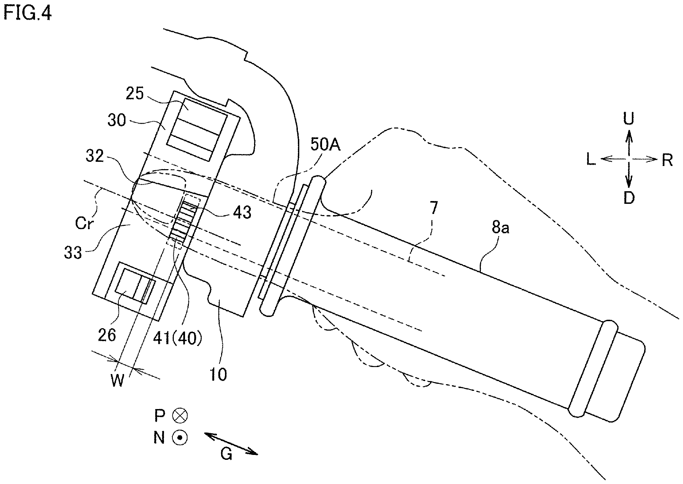

In this embodiment, the longitudinal direction G of the right grip portion 8a extends right-down-rearward from a base end to a distal end of the right grip portion 8a. Now, a thumb 50 extended in the longitudinal direction G of the right grip portion 8a while gripping the right grip portion 8a with fingers other than the thumb 50 is referred to as a thumb 50A. A direction from a palmar side to a nail of the thumb 50A is referred to as a direction N (a rearward direction according to the present teaching), and a direction opposite to the direction N is referred to as a direction P. The direction P and the direction N are orthogonal to a longitudinal direction of the thumb 50A (the longitudinal direction G of the right grip portion 8a) and to a width direction of the thumb 50A. Although there are some differences in the manner of gripping the grip portion 8a depending on the physical size and the riding posture of a user, the direction P and the direction N are defined herein based on an average manner of gripping. In this embodiment, the direction P and the direction N are inclined with respect to the vehicle right/left direction and to the vehicle forward/rearward direction. Note that, in FIG. 4, a symbol of an encircled middle dot represents a direction from a position farther from a viewer to a position closer to the viewer, and a symbol of an encircled x represents a direction from a position closer to the viewer to a position farther from the viewer. A thickness direction of the thumb 50A extended in the longitudinal direction G of the right grip portion 8a while gripping the right grip portion 8a is referred to as a direction PN.

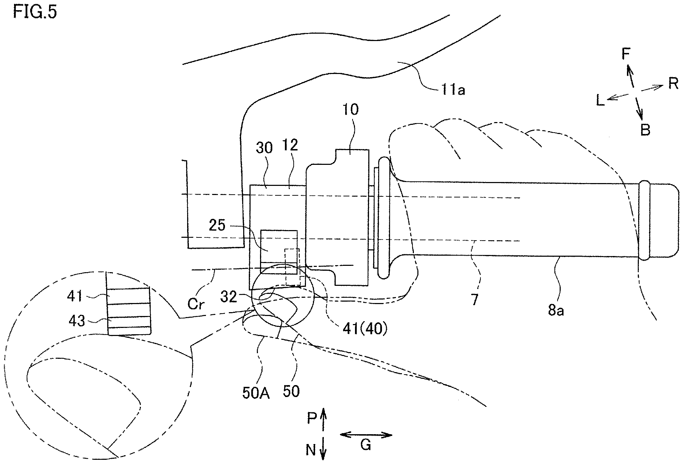

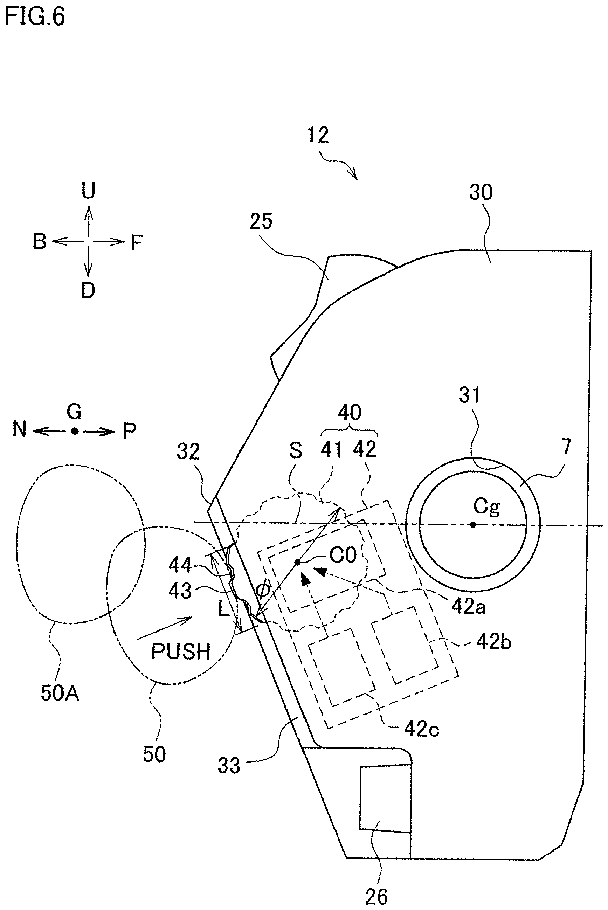

The flat surface 33 of the case 30 is formed so that the flat surface 33 extends downward and toward the direction P (see FIG. 6). Further, each of the angular portion 32 and the flat surface 33 is formed obliquely to the longitudinal direction G of the right grip portion 8a so that each extends toward the direction P and toward the right grip portion 8a (with respect to the longitudinal direction G) (see FIG. 5).

The rotary push switch 40 includes a rotating body 41 and a main body 42. The main body 42 is accommodated in the case 30, and secured to an inner surface of the case 30.

The rotating body 41 is a disc-like member made from materials such as a synthetic resin. The rotating body 41 is held by the main body 42 so as to be rotatable about an axis Cr extending in the longitudinal direction G of the right grip portion 8a (hereinafter, referred to as a rotation axis Cr). The rotation axis Cr is an axis passing through the center of the rotating body 41. Further, the rotating body 41 is held by the main body 42 so as to be movable in a predetermined direction (a direction PUSH in FIG. 6) orthogonal to the rotation axis Cr of the rotating body 41.

As shown in FIG. 4, the rotation axis Cr of the rotating body 41 is substantially parallel to the longitudinal direction G of the right grip portion 8a when viewed from the direction PN. Further, as shown in FIG. 5, when viewed from the direction orthogonal to the longitudinal direction G of the right grip portion 8a and to the direction PN, the rotation axis Cr of the rotating body 41 is slightly inclined with respect to the longitudinal direction G of the right grip portion 8a. Specifically, the rotation axis Cr of the rotating body 41 is slightly inclined with respect to the longitudinal direction G of the right grip portion 8a so that the rotation axis Cr extends toward the right grip portion 8a and toward the direction P. Thus, the rotation axis Cr of the rotating body 41 of this embodiment is almost parallel to the longitudinal direction G of the right grip portion 8a, and almost extends in the longitudinal direction G of the right grip portion 8a. The rotation axis Cr of the rotating body 41 is substantially parallel to the flat surface 33.

The rotating body 41 is arranged alongside the handlebar unit 7 in a direction orthogonal to the longitudinal direction G of the right grip portion 8a. As shown in FIG. 6, a portion of the rotation axis Cr of the rotating body 41 which overlaps the rotating body 41 is referred to as a central portion C0 of the rotating body 41. The central portion C0 of the rotating body 41 is positioned toward the direction N, as compared with a central axis Cg of the right grip portion 8a. In this embodiment, not only the central portion C0 of the rotating body 41, but the entire rotating body 41 is positioned toward the direction N as compared with the portion of the handlebar unit 7 which is located inside the case 30. Further, the central portion C0 of the rotating body 41 is positioned lower than a plane S which includes the central axis Cg of the right grip portion 8a and extends in the direction PN.

With respect to a circumferential direction of the rotating body 41, a portion of an outer circumferential surface of the rotating body 41 is accommodated in the case 30, and the remaining portion is exposed to the outside of the case 30. With respect to the width direction, the outer circumferential surface of the rotating body 41 is entirely exposed to the outside of the case 30, in this embodiment. Therefore, the entire outer circumferential surface of the rotating body 41 forms an operational surface 43 operable with the thumb 50. That is, the operational surface 43 extends continuously along the entire circumference of the rotating body 41 without interruption. The exposed portion of the rotating body 41 protrudes from a substantially quadrangular hole formed on the flat surface 33. Therefore, not only the above portion of the outer circumferential surface (operational surface 43) of the rotating body 41, but also a part of each of the both axial end surfaces of the rotating body 41 (a part of each of the both end surfaces crossing the longitudinal direction G of the right grip portion 8a) is exposed to the outside of the case 30.

Approximately one fourth of the operational surface 43, with respect to its circumferential length, is exposed to the outside of the case 30. The portion of the operational surface 43 which is exposed to the outside of the case 30 is positioned toward the direction N as compared with the central axis Cg of the right grip portion 8a. Further, the portion of the operational surface 43 which is exposed to the outside of the case 30 is positioned lower than the plane S including the central axis Cg of the right grip portion 8a and extending in the direction PN.

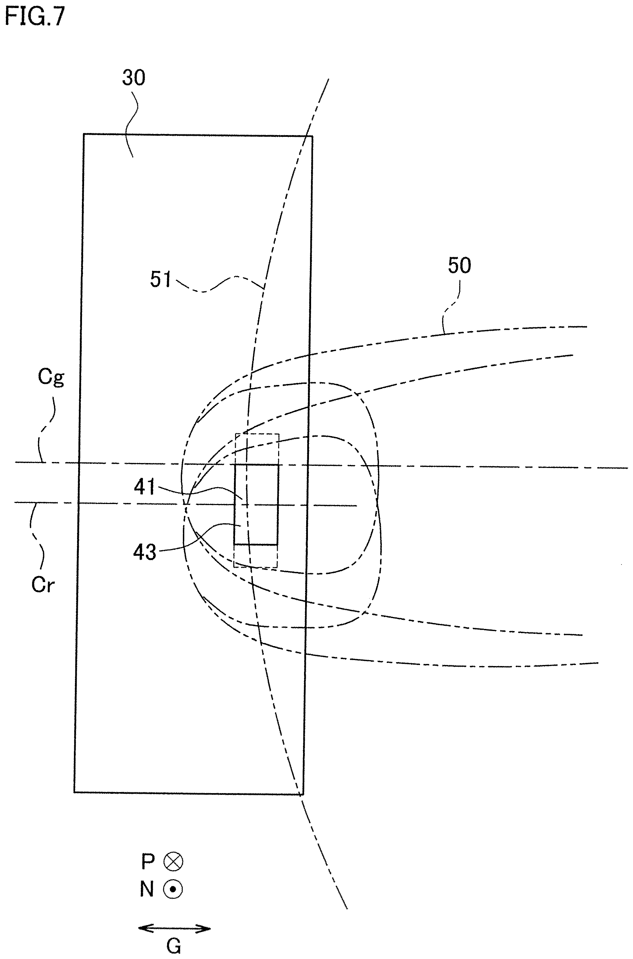

As shown in FIG. 7, the rotating body 41 is rotationally operated by swinging the thumb 50 while the palmar side of the thumb 50 of the hand gripping the right grip portion 8a is in contact with the portion of the operational surface 43 which is exposed to the outside of the case 30. At this time, the third joint of each of the fingers other than the thumb 50 (the third joint from the tip of each finger: MCP joint) may be bent, or not. The thumb 50 is swung by pivoting the thumb about its third joint which is located near the wrist. Note that a line 51 in FIG. 7 shows a trajectory of a point at the distal end of the swinging thumb 50. The rotating body 41 is operated also by pushing, specifically by pushing the portion of the operational surface 43 which is exposed to the outside of the case 30 in the direction PUSH in FIG. 6 with the palmar side of the thumb 50 of the hand gripping the right grip portion 8a. The rotating body 41 is configured to return back to its original position when the thumb 50 pushing the rotating body 41 leaves.

The outer diameter ø of the rotating body 41 of this embodiment (the diameter of the operational surface 43) (see FIG. 6) is at a similar level to the diameter of the handlebar insertion hole 31 and to the diameter of the handlebar unit 7. A width W of the operational surface 43 (the width in the direction of the rotation axis Cr) (see FIG. 4) is smaller than the radius (ø/2) of the operational surface 43. As shown in FIG. 6, the length of the portion of the operational surface 43 which is exposed to the outside of the case 30 in the direction orthogonal to the width W when viewed from the direction orthogonal to a plane which directly connects the both circumferential ends of the portion of the operational surface 43 which is exposed to the outside of the case 30 is referred to as a linear length L of the exposed portion of the operational surface 43. In this embodiment, the circumferential length of the portion of the operational surface 43 which is exposed to the outside of the case 30 is less than a half of the entire circumference of the operational surface 43, and therefore, the linear length L is equal to the distance between the both circumferential ends of the portion of the operational surface 43 which is exposed to the outside of the case 30. The width W of the operational surface 43 is smaller than the linear length L of the exposed portion of the operational surface 43.

An end portion of the operational surface 43 which is farther from the right grip 8a is positioned so that the thumb 50 of the hand gripping the right grip portion 8a reaches there without any difficulty. Further, on both sides of the rotating body 41 in the direction along the rotation axis Cr, there is no protrusion on an outer surface of the case 30. Therefore, as shown in FIG. 5, it is possible to rotationally operate the rotating body 41 while the palmar side of the thumb 50 is in contact with the end portion (an angular portion) of the operational surface 43 which is farther from the right grip portion 8a. Further, since the width W of the operational surface 43 is relatively small, it is also possible to operate the rotating body 41 while the palmar side of the thumb 50 is in contact with the end portion (an angular portion) of the operational surface 43 which is closer to the right grip portion 8a. Furthermore, it is a matter of course that the rotating body 41 may be operated while the palmar side of the thumb 50 is in surface contact with the operational surface 43.

The operational surface 43 is an uneven surface on which recesses 44 and projections are arranged alternately with each other in the circumferential direction (see FIG. 6). That is, the recesses 44 and the projections are arranged in a swing direction in which the thumb 50 of the hand gripping the right grip portion 8a is swung. The groove width (the largest width) of each recess 44 in the circumferential direction of the operational surface 43 is designed so that the thumb 50 can be pressed onto an edge of the recess 44 while gripping the right grip portion 8a with fingers other than the thumb 50. This enables the thumb 50 to contact the edge of the recess 44 while being caught thereon, to rotationally operate the rotating body 41. The recess 44 may be shaped so that a bottom surface of the recess 44 can be touched with the thumb 50, or so that the bottom surface of the recess 44 cannot be touched with the thumb 50. That is, the operational surface 43 may include one or more portions which cannot be touched with the thumb 50.

Further, on the operational surface 43, there are formed a plurality of small recesses (not shown) each having a groove width smaller than that of each recess 44. These small recesses function to prevent a slip. The size of each of the small recesses is 0.1 mm to 0.3 mm, for example, but the size is not limited to this.

As shown in FIG. 6, the main body 42 of the rotary push switch 40 includes a resistance applying unit 42a, a position detecting unit 42b, and a push detecting unit 42c. Note that the resistance applying unit 42a, the position detecting unit 42b, and the push detecting unit 42c in FIG. 6 are illustrated conceptually, and do not show their shapes.

The resistance applying unit 42a is configured to apply resistance to rotation of the rotating body 41. The resistance applying unit 42a is configured to increase/decrease the resistance applied to the rotating body 41 with respect to a rotation direction of the rotating body 41. That is, the resistance applied to the rotating body 41 is increased to the maximum each time the rotating body 41 is rotated a predetermined angle α. This gives a click feeling to the rotational operation of the rotating body 41, at intervals of the angle α. The angle α is 30 degrees, for example, but is not limited to this. The specific structure of the resistance applying unit 42a is similar to that of the resistance applying unit of a general rotary switch.

The position detecting unit 42b is configured to detect a rotational angle of the rotating body 41. Further, the position detecting unit 42b is configured to generate a rotational operation signal corresponding to the detected rotational angle and transmit the signal to the controller. The position detecting unit 42b is configured to transmit the rotational operation signal at a rotational angle at which a maximum resistance is applied to the rotating body 41 by the resistance applying unit 42a. The position detecting unit 42b may be configured to transmit the rotational operation signal at intervals of angle α, or may be configured to transmit the rotational operation signal at intervals of an angle obtained by multiplying the angle α by a predetermined number.

Further, the position detecting unit 42b may be configured to detect an angle of consecutive rotations of the rotating body 41. In this case, an input value transmitted as the rotational operation signal may be proportional to the rotational angle of the consecutive rotations, or may be non-proportional to this. In the non-proportional case, the following settings are made, for example: the input value for each angle α is set to 1 when the angle of the consecutive rotations is the same as or twice or three times as large as the angle α, and the input value for each angle α is set to 2 or a number larger than 2 when the angle of the consecutive rotations is four or more times as large as the angle α.

The push detecting unit 42c is configured to detect whether the rotating body 41 is operated by pushing. That is, the push detecting unit 42c detects whether the rotating body 41 is moved in the direction PUSH in FIG. 6. Further, the push detecting unit 42c transmits a push operation signal to the controller when the push detecting unit 42c detects that the rotating body 41 is operated by pushing. The specific structures of the position detecting unit 42b and the push detecting unit 42c are respectively similar to those of the position detecting unit and the push detecting unit of a general rotary switch.

The motorcycle 1 of this embodiment has the following features.

The input device 12 includes a case 30, and a rotating body 41 including an operational surface 43 arranged in the circumferential direction, a portion of which is accommodated in the case 30 and a remaining portion of which is exposed to the outside of the case 30, the rotating body 41 being rotatable about the axis Cr extending in the longitudinal direction G of the grip portion 8a. The rotating body 41 is rotationally operated by swinging the thumb 50 of the hand gripping the grip portion 8a while the palmar side of the thumb 50 is in contact with the portion of the operational surface 43 which is exposed to the outside of the case 30.

Different rotational angles of the rotating body 41 respectively correspond to different operation amounts to be input. This allows the rotating body 41 to be used for a wider variety of input operations than a push or slide operation member, leading to its good operability.

Further, in this embodiment, the rotating body 41 is operated with the thumb 50, and this improves operability of the rotating body 41. The thumb 50 is easily moved while the grip portion 8a is gripped with other fingers, and therefore suitable for operation of the rotating body 41.

However, since the input device 12 is provided to the handlebar unit 7, it is necessary to avoid interference between the rotating body 41 and the handlebar unit 7. Therefore, the rotating body 41 having the rotation axis Cr extending in the longitudinal direction G of the grip portion 8a is disposed in the vicinity of a part of the handlebar unit 7 extending in the longitudinal direction G of the grip portion 8a. Accordingly, the larger the outer diameter of the rotating body 41 is, the larger the distance between the handlebar unit 7 and the portion of the operational surface 43 which is exposed to the outside of the case 30.

While the grip portion 8a is gripped with the fingers other than the thumb 50, it is easy to swing the thumb 50 regardless of the distance between the distal end of the thumb 50 and the handlebar unit 7. Therefore, irrespective of the distance between the operational surface 43 and the handlebar unit 7, it is easy to operate the rotating body 41 by swinging the thumb 50. Further, the thumb 50 is swung by pivoting the thumb about its third joint located closer to the wrist, and therefore the angle of the range within which the thumb 50 is swung is larger, but it is difficult to slightly move the thumb 50. Therefore, it would be better that the diameter ø of the operational surface 43 (the outer diameter of the rotating body 41) is large to some extent to facilitate operation of the rotating body 41 by swinging the thumb 50. In this regard, the input device 12 of this embodiment has good operability while avoiding interference with the handlebar unit 7. Further, it is possible to increase the operation amount in each operation by increasing the circumferential length of the portion of the operational surface 43 which is exposed to the outside of the case 30.

As described above, it is difficult to slightly swing the thumb 50. Further, while the grip portion 8a is gripped with the fingers other than the thumb 50, the thumb 50 tends to be stiffened. Therefore, if no resistance is applied to the rotation of the rotating body 41, there is a possibility that the rotating body 41 is rotated too much to slightly adjust the rotational angle of the rotating body 41. In this embodiment, however, resistance is applied to the rotation of the rotating body 41 by the resistance applying unit 42a, and this makes it easier to slightly adjust the rotational angle of the rotating body 41, thereby improving operability of the rotating body 41.

Further, in this embodiment, the resistance applying unit 42a is configured to increase/decrease the resistance applied to the rotating body 41 with respect to the rotation direction of the rotating body 41 so that a click feeling is given to the rotational operation of the rotating body 41 at intervals of the predetermined angle α. The click feeling given to the rotational operation of the rotating body 41 at intervals of the predetermined angle α enables the rider to realize that the rotating body 41 has been rotated the angle α. This facilitates input operations in which a selected item is changed each time the rotating body 41 is rotated the predetermined angle α, for example.

Further, the rotating body 41 is easily rotated even though relatively larger resistance is applied to the rotating body 41 since a larger force is exerted thereon from the thumb 50. Therefore, a maximum value of the resistance applied to the rotating body 41 may be increased, thereby to increase the increment/decrement (the difference between the maximum value and the minimum value) of the resistance applied to the rotating body 41. This provides a clearer click feeling to the rotational operation of the rotating body 41.

Further, in this embodiment, the width W of the operational surface 43 is smaller than the linear length L of the exposed portion of the operational surface 43. The smaller width W of the operational surface 43 allows a contact area between the thumb 50 and the operational surface 43 to be smaller. This results in a larger pressure per unit area on the contact area between the thumb 50 and the operational surface 43. This helps the rider to realize which portion of the thumb 50 contacts the operational surface 43, thereby further improving usability.

Further, the smaller width of the operational surface 43 allows the rotating body 41 to be installed in a smaller space. This helps the rotating body 41 not interfere with the handlebar unit 7.

Further, in this embodiment, the entire outer circumferential surface of the rotating body 41 forms the operational surface 43, and a part of each of the both end surfaces crossing the rotation axis Cr of the rotating body 41 is exposed to the outside of the case 30. This makes it possible to rotate the rotating body 41 while the thumb 50 is in contact with an edge of one of the both end surfaces of the rotating body 41 (an edge of the operational surface 43). In this case, the pressure per unit area on the contact area between the thumb 50 and the operational surface 43 is larger than the case where the rotating body 41 is rotated with the thumb 50 surface-contacting the operational surface 43. This helps the rider to realize which portion of the thumb 50 contacts the operational surface 43, thereby improving usability.

Further, in this embodiment, the rotating body 41 is arranged alongside the handlebar unit 7 in the direction orthogonal to the longitudinal direction G of the grip portion 8a. This offers greater flexibility to the location where the rotating body 41 is provided than in the case where the handlebar unit 7 passes through an inner portion of the rotating body 41. This allows the rotating body 41 to be disposed at a location where the rotating body 41 is operated more easily. In addition, the above structure increases the freedom in determining the size of the outer diameter of the rotating body 41, compared with the case where the handlebar unit 7 passes through an inner portion of the rotating body 41.

Furthermore, in this embodiment, the operational surface 43 is an uneven surface on which the recesses 44 and the projections are alternately arranged in the swing direction in which the thumb 50 of the hand gripping the grip portion 8a is swung, and a groove width of each recess 44 in the swing direction is designed to enable an edge of a recess 44 to be pushed with the thumb 50 of the hand gripping the grip portion 8a. Therefore, it is possible to rotate the rotating body 41 by swinging the thumb 50 while pushing the edge of the recess 44 (or a surface defining the recess) with the thumb 50. The thumb 50 is thus caught on the recess 44, and this prevents the thumb 50 from slipping in the circumferential direction. This improves operability of the rotating body 41.

Further, in this embodiment, the plurality of small recesses each having the smaller groove width than that of each recess 44 are formed on the operational surface 43 of the rotating body 41. Therefore, when the rotating body 41 is rotated by swinging the thumb 50 while the thumb 50 is in contact with the operational surface 43, the small recesses prevent a slip of the thumb 50 (the slip is not limited to a slip in the circumferential direction of the operational surface 43). This further improves operability of the rotating body 41.

Further, in this embodiment, the rotating body 41 is configured to be operable by pushing the rotating body 41 with the thumb 50 of the hand gripping the grip portion 8a in a predetermined direction orthogonal to the rotation axis Cr of the rotating body 41. Thus, the rotating body 41 is operable not only through the rotational operation by swinging the thumb 50, but also through the pushing operation, and therefore three or more types of input operations are possible using the single rotating body 41.

A preferred embodiment has been described above. However, the present teaching is not limited to the above-described embodiment, and various changes can be made within the scope of the claims. Further, variations which will be described later may be used in combination as needed. Note that the term "preferable" in this specification is non-exclusive, and means "preferable, but not limited to".

In the above embodiment, the operational surface 43 is formed into the uneven surface where the recesses 44 and the projections are arranged alternately with each other; however, the shape of the operational surface 43 is not limited to this. For example, the operational surface may be formed so that its diameter is constant with respect to the circumferential direction.

In the above embodiment, the plurality of small recesses (not shown) each having the smaller groove width than that of each recess 44 are formed on the operational surface 43; however, the small recesses do not have to be formed. Further, the outer circumferential surface of the rotating body 41 may be covered with skin made of materials having a high friction coefficient, such as rubber, to serve a non-slip function on the operational surface 43. Alternatively, the non-slip function may be provided on the operational surface 43 in any other way.

The outer diameter ø of the rotating body 41 (the diameter of the operational surface 43), the width W of the rotating body 41 (the width of the operational surface 43), and the linear length L of the exposed portion of the operational surface 43 are not limited to those in the above embodiment, respectively. Provided however, it is preferable that the width W of the operational surface 43 of the rotating body 41 is smaller than the linear length L of the exposed portion of the operational surface 43.

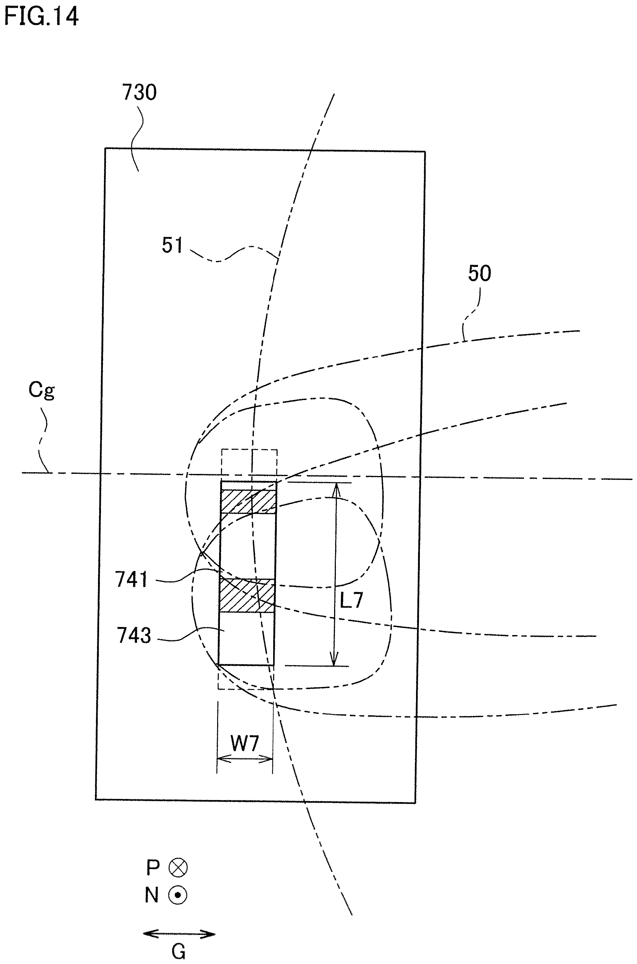

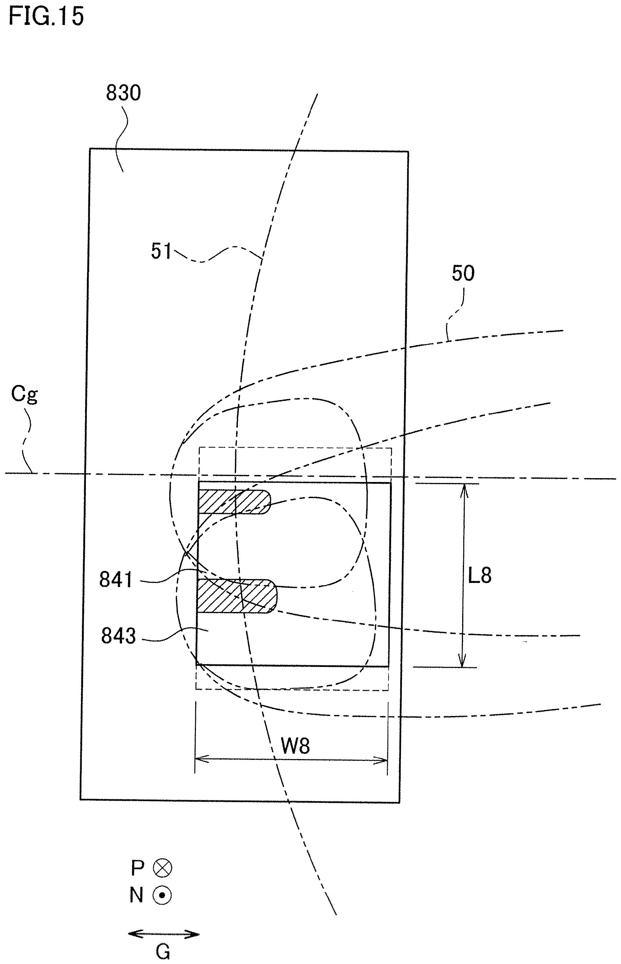

As shown in FIGs. 14 and 15, for example, each linear length L7, L8 of the exposed portion of an operational surface 743, 843 of a rotating body 741, 841 (the distance between the both circumferential ends of a portion of the operational surface 743, 843 which is exposed to the outside of a case 730, 830) may be larger than the linear length L of the exposed portion of the operational surface 43 of the above embodiment. In FIG. 14, a width W7 of the operational surface 743 in a direction of a rotation axis is smaller than the linear length L7 of the exposed portion of the operational surface 743. Meanwhile, in FIG. 15, a width W8 of the operational surface 843 in a direction of a rotation axis is larger than the linear length L8 of the exposed portion of the operational surface 843. Note that, in each of FIGs. 14 and 15, the thumb 50 used for rotationally operating the rotating body 741, 841 while a portion of the palmar side of the thumb 50 which is near the distal end the thumb 50 is in contact with the operational surface 743, 843 is illustrated with alternate long and two short dashes lines. Further in each of FIGs. 14 and 15, hatched are portions of the operational surface 743, 843 each of which is contacted by the palmar side of the thumb 50 illustrated with the alternate long and two short dashes lines.

Hereinafter, description will be given for the reason why it is preferable that the width of the operational surface of the rotating body is smaller than the linear length of the exposed portion of the operational surface. As shown in each of FIGs. 14 and 15, the longer linear length L7, L8 of the exposed portion of the operational surface 743, 843 allows the thumb 50 to move widely to operate the rotating body 741, 841, and this facilitates operation of the rotating body 741, 841 by swinging the thumb 50. However, the increase in the linear length L7, L8 of the exposed portion of the operational surface 743, 843 increases the distance which the distal end of the thumb 50 travels in the longitudinal direction G of the grip portion 8a as the thumb 50 is swung. Further, as the thumb is swung, the direction of the tangent line to the contact area between the operational surface and the thumb 50 changes, and this changes the length of the contact area in the circumferential direction. Therefore, if the width W8 of the operational surface 843 in the direction of the rotation axis is larger as shown in FIG. 15, it is more likely that a change is caused in the size of the contact area between the distal end of the thumb 50 and the operational surface 843 as the thumb 50 is swung. A great change in the size of the contact area between the distal end of the thumb 50 and the operational surface provides the rider with a feeling of strangeness, leading to poor usability. However, in the variation of FIG. 14, the smaller width W7 of the operational surface 743 results in the smaller contact area between the distal end of the thumb 50 and the operational surface 743. Thus, even if the linear length L7 of the exposed portion of the operational surface 743 is larger and the operation amount in each operation is larger, the change in the size of the contact area between the distal end of the thumb 50 and the operational surface 743 is smaller, leading to good usability.

In the above embodiment, the width W of the operational surface 43 is smaller than the radius of the operational surface 43 (ø/2); however, the width W may be larger than the radius (ø/2). Provided however, it is preferable that the width W of the operational surface 43 is smaller than the diameter ø of the operational surface 43.

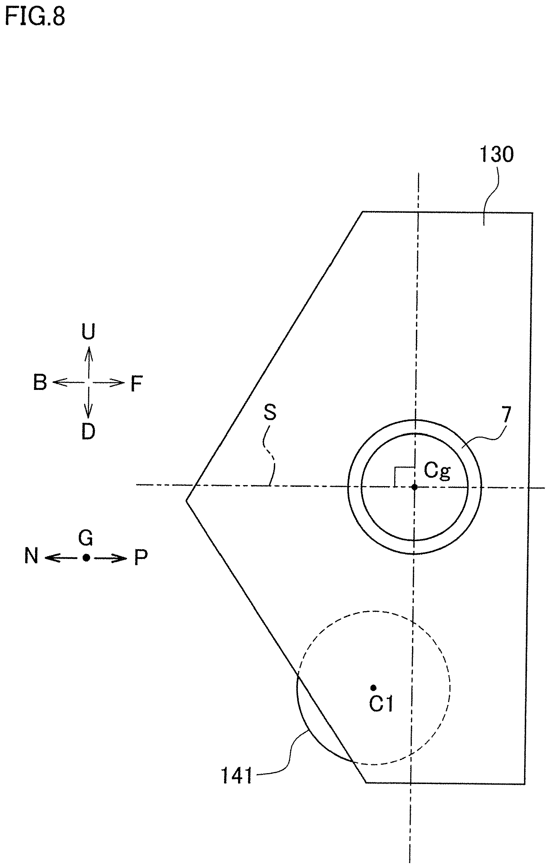

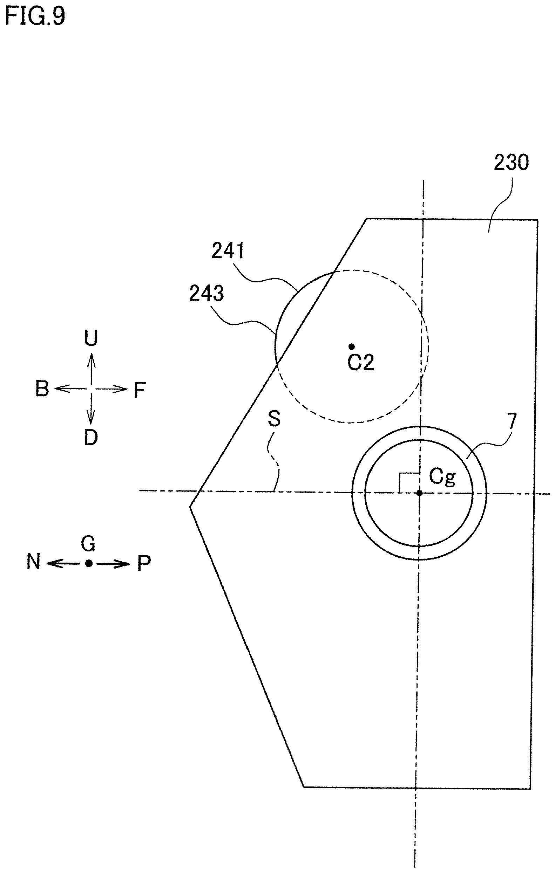

In the above embodiment, the rotating body 41 is positioned toward the direction N as compared with the portion of the handlebar unit 7 which is located inside the case 30; however, the position of the rotating body 41 is not limited to this. As shown in FIGs. 8 and 9, for example, an entire rotating body 141, 241 does not have to be positioned toward the direction N as compared with the portion of the handlebar unit 7 which is located inside a case 130, 230, as long as a central portion C 1, C2 of the rotating body 141, 241 is positioned toward the direction N as compared with the central axis Cg of the grip portion 8a.

Further, in the above embodiment, the central portion C0 of the rotating body 41 is positioned lower than the plane S including the central axis Cg of the grip portion 8a and extending in the direction PN; however, a variation shown in FIG. 9, for example, is also possible, in which the central portion C2 of the rotating body 241 is positioned higher than the plane S.

Furthermore, in the above embodiment, the portion of the operational surface 43 which is exposed to the outside of the case 30 is positioned lower than the plane S including the central axis Cg of the grip portion 8a and extending in the direction PN; however, a variation shown in FIG. 9, for example, is also possible, in which a portion of the operational surface 243 which is exposed to the outside of the case 30 is positioned higher than the plane S.

The surface of the case 30 having the hole for the exposed portion of the rotating body 41 is not limited to the flat surface 33 of the above embodiment which is inclined as described above. For example, as is in the case 230 shown in FIG. 9, a surface inclined so that the surface extends upward and toward the direction P may have the hole for the exposed portion of the rotating body 241. Alternatively, for example, a surface parallel to the grip portion 8a when viewed from the direction orthogonal to the direction PN and to the longitudinal direction G of the grip portion 8a may have the hole for the exposed portion of the rotating body.

In the above embodiment, approximately one fourth of the operational surface 43 with respect to its circumferential length is exposed to the outside of the case 30; however, the length of the exposed portion of the operational surface 43 is not limited to this. For example, a half or more of the operational surface with respect to its circumferential length may be exposed to the outside of the case.

In the above embodiment, the rotation axis Cr of the rotating body 41 is almost parallel to the longitudinal direction G of the right grip portion 8a; however, the direction of the rotation axis Cr of the rotating body 41 is not limited to that of the above embodiment as long as it extends substantially in the longitudinal direction G of the grip 8a. That is, the rotation axis Cr of the rotating body 41 may be completely parallel to the longitudinal direction G of the grip portion 8a, or may be inclined with respect to the longitudinal direction G of the grip portion 8a within the range of plus-minus 45 degrees.

In the case where the rotation axis Cr of the rotating body 41 inclined with respect to the longitudinal direction G of the grip portion 8a, it is preferable to determine its inclination angle taking into account the swing direction of the thumb 50.

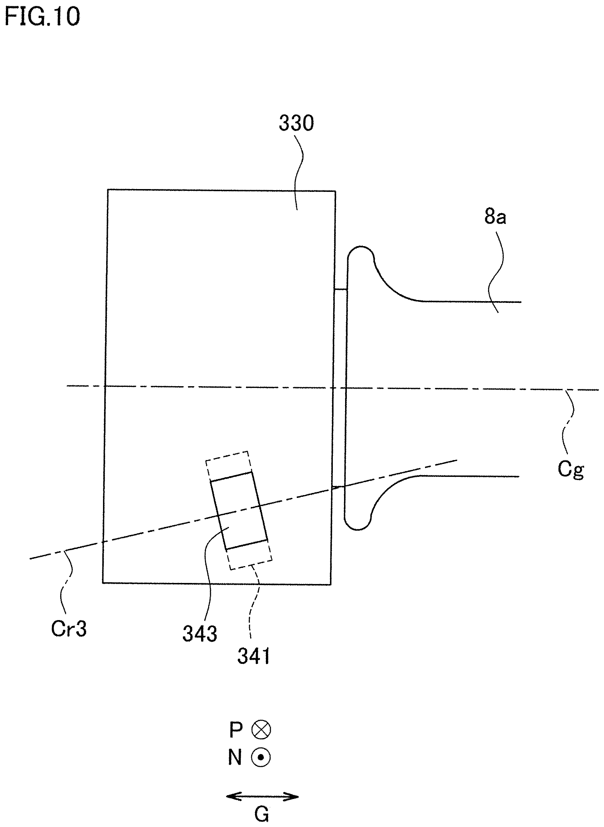

For example, in the rotating body 341 shown in FIG. 10, a portion of an operational surface 343 which is exposed to the outside of a case 330 is positioned lower than the central axis Cg of the grip portion 8a when viewed from the direction PN. In this case, a rotation axis Cr3 of the rotating body 341 may extend upward and toward the grip portion 8a when viewed from the direction PN.

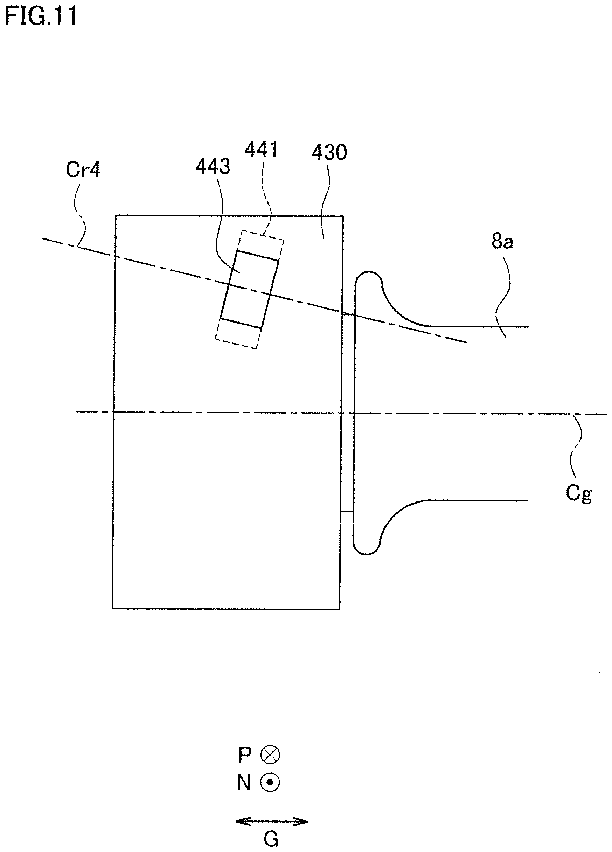

Further, for example, in a rotating body 441 shown in FIG. 11, a portion of an operational surface 443 which is exposed to the outside of a case 430 is positioned higher than the central axis Cg of the grip portion 8a when viewed from the direction PN. In this case, a rotation axis Cr4 of the rotating body 441 may extend downward and toward the grip portion 8a when viewed from the direction PN.

Furthermore, for example, when viewed from the direction orthogonal to the longitudinal direction G of the right grip portion 8a and to the direction PN, the rotation axis Cr of the rotating body 41 may be parallel to the longitudinal direction G of the grip 8a, or may be inclined with respect to the longitudinal direction G of the right grip portion 8a so that the rotation axis Cr extends toward the grip portion 8a and toward the direction N.

Note that each of the rotating bodies 141, 241, 341, and 441 described above with reference to FIGs. 8 to 11 is a disc-like member similar to the rotating body 41 of the above embodiment, and the rotation axis of each rotating body passes through the center of the rotating body.

In the above embodiment, the case 30 is formed so that the both end surfaces of the rotating body 41 in its axial direction are exposed to the outside of the case 30; however, the case 30 may be formed so that one of the axial end surfaces of the rotating body 41 is exposed to the outside of the case 30 and the other end surface is not exposed to the outside of the case 30. Alternatively, the case 30 may be formed so that the both axial end surfaces of the rotating body 41 are not exposed to the outside of the case 30.

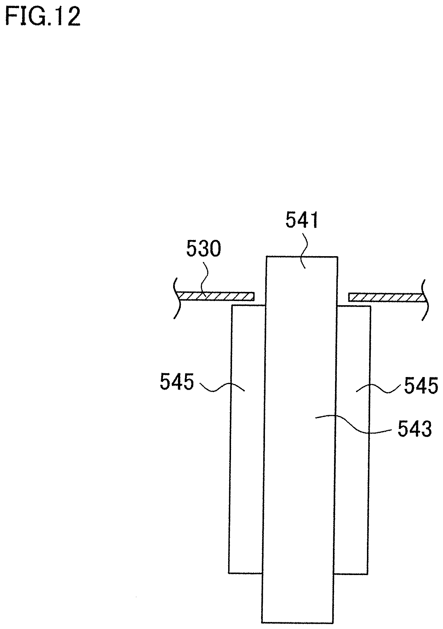

In the above embodiment, the entire outer circumferential surface of the rotating body 41 forms the operational surface 43 operable with the thumb 50; however, the present teaching is not limited to this structure. For example, the following structure is possible: as shown in FIG. 12, a part of an outer circumferential surface of a rotating body 541 in its axial direction forms an operational surface 543, and the remaining part forms a non-operational surface 545 which is always accommodated in a case 530. The diameter of the operational surface 543 is larger than the diameter of the non-operational surface 545. Further, in FIG. 12, the both axial end portions of the rotating body 541 form the non-operational surface 545; however, the non-operational surface may be formed by either one of the axial end portions of the rotating body.

The position and the direction of each of the right and left grip portions 8a and 8b are not limited to those in the above embodiment. In the above embodiment, the thickness direction of the thumb 50A extended in the longitudinal direction G of the grip portion 8a while gripping the grip portion 8a (i.e., the direction PN) is inclined with respect to the vehicle forward/rearward direction; however, the direction PN may be parallel to the vehicle forward/rearward direction.

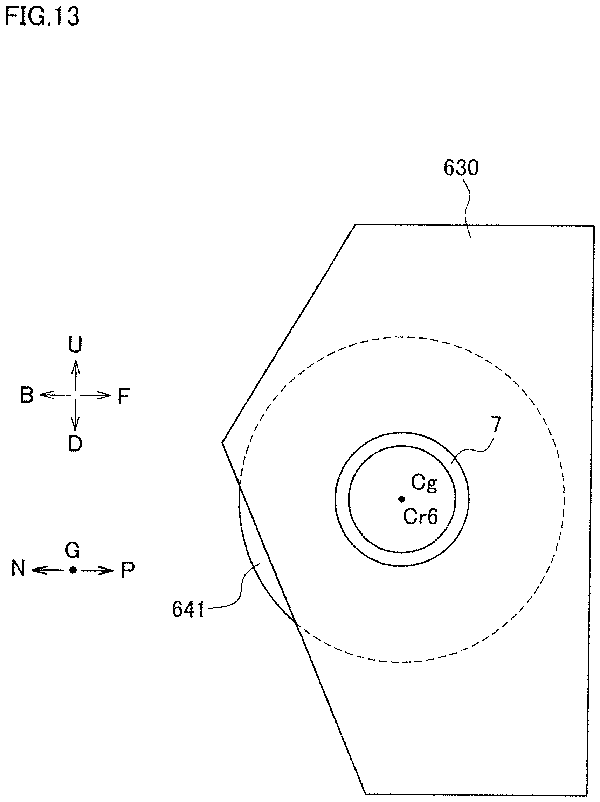

In the above embodiment, the rotating body 41 is arranged alongside the handlebar unit 7 in the direction orthogonal to the longitudinal direction G of the grip portion 8a; however, for example as shown in FIG. 13, the handlebar unit 7 may pass through an inner portion of a rotating body 641. In this case, although the outer diameter of the rotating body 641 is larger than the outer diameter of the handlebar unit 7, the distance between a portion of an operational surface 643 which is exposed to the outside of a case 630 and the handlebar unit 7 is smaller than the case where the rotating body 41 is arranged alongside the handlebar unit 7 as is in the above embodiment. Further, it is preferable that a rotation axis Cr6 of the rotating body 641 is parallel to the longitudinal direction G of the grip portion 8a.

In the above embodiment, the resistance applying unit 42a of the input device 12 is configured to increase/decrease resistance applied to the rotating body 41 with respect to the rotation direction of the rotating body 41; however, the resistance applying unit may be configured to apply constant resistance to the rotating body 41 irrespective of the rotational angle.

In the above embodiment, the rotary push switch 40 is configured to be operable through both of the rotational operation and the pushing operation; however, the switch may be configured to be operable only through the rotational operation. Further, the rotary push switch 40 of this embodiment is configured to be rotatable in the normal and reverse directions; however, the switch may be configured to rotatable in one of these directions.

In the above embodiment, the single rotary push switch 40 is included in the input device 12; however, the input device 12 may include two or more rotary push switches 40.

The above embodiment deals with, as an example, the case where the input device of the present teaching is applied to the input device 12 provided to the right portion of the handlebar unit 7; however, the input device of the present teaching may be applied to the input device 13 provided to the left portion of the handlebar unit 7.

In the above embodiment, the handlebar unit 7 has a section of a hollow circle; however, the shape of the section of the handlebar unit of the present teaching is not limited to the circular shape. For example, the handlebar unit may have a section of a hollow quadrangle.

In the above embodiment, the handlebar unit 7 has clip-on handlebars; however, the handlebar unit of the present teaching may have a one-piece handlebar. The clip-on handlebars are handlebars coupled to front forks without a handle crown interposed therebetween. The one-piece handlebar is a handlebar directly coupled to a handle crown.

The motorcycle 1 of the above embodiment is a street motorbike and a motorbike in a narrow sense; however, the saddle type vehicle of the present teaching is not limited to the motorbike in the narrow sense. It should be noted that the term "saddle type vehicle" refers to overall vehicles which a rider rides astride a saddle. The saddle type vehicle of the present teaching encompasses: two-wheeled motor vehicles (motorbikes in a broad sense), three-wheeled vehicles, four-wheelers (all terrain vehicles (ATV)), water scooters, snowmobiles, and the like. Further, the motorbikes in the broad sense include scooters and the like, in addition to the motorbikes in the narrow sense.

## Claims

1. A saddle type vehicle (1) comprising:
a handlebar unit (7) provided forward of a seat (23) in a vehicle forward/rearward direction, the seat (23) held by a vehicle body frame (4);
a left grip portion (8b) and a right grip portion (8a) respectively provided on a left end portion and a right end portion of the handlebar unit (7); and
an input device (12) provided to the handlebar unit (7), the input device (12) configured to be operable with a palmar side of a thumb of a hand gripping one of the left grip portion (8b) and the right grip portion (8a);
wherein the input device (12) comprises:
a case (30); and
a rotating body (41) including an operational surface (43) arranged in a circumferential direction, wherein a portion of said operational surface (43) is accommodated in the case (30) and a remaining portion of said operational surface (43) is exposed to an outside of the case (30), the rotating body (41) being rotatable about an axis (Cr) extending in a longitudinal direction of the corresponding one of the grip portions by swinging the thumb of the hand gripping the one of the grip portions while the palmar side of the thumb is in contact with the portion of the operational surface (43) which is exposed to the outside of the case (30), **characterised in that** the operational surface (43) extends continuously along the entire circumference of the rotating body (41) without interruption.

2. The saddle type vehicle (1) according to claim 1, wherein the input device (12) includes a resistance applying unit (42a) configured to apply resistance to rotation of the rotating body (41).

3. The saddle type vehicle (1) according to claim 2, wherein the resistance applying unit (42a) is configured to increase/decrease the resistance applied to the rotating body (41) with respect to a rotation direction of the rotating body (41) so that a click feeling is given to a rotational operation of the rotating body (41) at intervals of a predetermined angle.

4. The saddle type vehicle (1) according to any one of claims 1 to 3, wherein in the rotating body (41), a width (W) of the operational surface (43) in a direction of the axis (Cr) extending in the longitudinal direction of the one of the grip portions is smaller than a length (L) of the portion of the operational surface (43) which is exposed to the outside of the case (30) in a direction orthogonal to the width (W) when viewed from a direction orthogonal to a plane directly connecting both circumferential ends of the portion of the operational surface (43) which is exposed to the outside of the case (30).

5. The saddle type vehicle (1) according to any one of claims 1 to 4, wherein:
an entire outer circumferential surface of the rotating body (41) forms the operational surface (43); and
at least a part of each of both end surfaces of the rotating body (41), each of which crosses the longitudinal direction of the one of the grip portions, is exposed to the outside of the case (30).

6. The saddle type vehicle (1) according to any one of claims 1 to 5, wherein the rotating body (41) is arranged alongside the handlebar unit (7) in a direction orthogonal to the longitudinal direction of the one of the grip portions.

7. The saddle type vehicle (1) according to any one of claims 1 to 6, wherein:
the operational surface (43) of the rotating body (41) is an uneven surface on which recesses (44) and projections are arranged alternately with each other in a swing direction in which the thumb of the hand gripping the one of the grip portions is swung; and
a groove width of each recess (44) in the swing direction is designed to enable an edge of the recess (44) to be pushed with the thumb of the hand gripping the one of the grip portions.

8. The saddle type vehicle (1) according to claim 7, wherein a plurality of small recesses each having a groove width smaller than that of each of the recesses (44) are formed on the operational surface (43) of the rotating body (41).

9. The saddle type vehicle (1) according to any one of claims 1 to 8, wherein the rotating body (41) is configured to be operable by pushing the rotating body (41) with the thumb of the hand gripping the one of the grip portions in a predetermined direction orthogonal to the axis (Cr) extending in the longitudinal direction of the one of the grip portions.

10. The saddle type vehicle (1) according to any one of claims 1 to 9, wherein the portion of the operational surface (43) which is exposed to the outside of the case (30) is positioned rearward of a central axis of the one of the grip portions, assuming that a rearward direction is a direction from the palmar side to a nail of the thumb of the hand gripping the one of the grip portions, with the thumb extended in the longitudinal direction of the one of the grip portions.

## Patentansprüche

1. Spreizsitz-Fahrzeug (1), das umfasst:
eine Lenker-Einheit (7), die sich in einer Fahrzeug-Längsrichtung vor einem Sitz (23) befindet, wobei der Sitz (23) von einem Fahrzeug-Karosserierahmen (4) gehalten wird;
einen linken Griff-Abschnitt (8b) und einen rechten Griff-Abschnitt (8a), die sich an einem linken Endabschnitt bzw. einem rechten Endabschnitt der Lenker-Einheit (7) befinden; und
eine Eingabe-Einrichtung (12), die sich an der Lenker-Einheit (7) befindet, wobei die Eingabe-Einrichtung (12) so ausgeführt ist, dass sie mit einer Handflächenseite eines Daumens einer Hand betätigt werden kann, die den linken Griff-Abschnitt (8b) oder den rechten Griff-Abschnitt (8a) ergreift;
wobei die Eingabe-Einrichtung (12) umfasst:
eine Verkleidung (30); und
einen Dreh-Körper (41), der eine Betätigungs-Fläche (43) enthält, die in einer Umfangsrichtung angeordnet ist, wobei ein Teil der Betätigungs-Fläche (43) in der Verkleidung (30) aufgenommen ist und ein verbleibender Teil der Betätigungs-Fläche (43) zu einer Außenseite der Verkleidung (30) freiliegt, der Dreh-Körper (41) um eine Achse (Cr) herum gedreht werden kann, die sich in einer Längsrichtung des entsprechenden der Griff-Abschnitte erstreckt, indem der Daumen der den einen der Griff-Abschnitte ergreifenden Hand geschwenkt wird und dabei die Handflächenseite des Daumens in Kontakt mit dem zu der Außenseite der Verkleidung (30) freiliegenden Teil der Betätigungs-Fläche (43) ist,
**dadurch gekennzeichnet, dass** sich die Betätigungsfläche (43) ohne Unterbrechung durchgehend über den gesamten Umfang des Dreh-Körpers (41) erstreckt.

2. Spreizsitz-Fahrzeug (1) nach Anspruch 1, wobei die Eingabe-Einrichtung (12) eine Einheit (42a) zum Ausüben von Widerstand enthält, die so ausgeführt ist, dass sie Drehung des Dreh-Körpers (41) Widerstand entgegensetzt.

3. Spreizsitz-Fahrzeug (1) nach Anspruch 2, wobei die Einheit (42a) zum Ausüben von Widerstand so ausgeführt ist, dass sie den auf den Dreh-Körper (41) ausgeübten Widerstand in Bezug auf eine Drehrichtung des Dreh-Körpers (41) verstärkt/abschwächt, so dass durch eine Dreh-Betätigung des Dreh-Körpers (41) in Intervallen eines vorgegebenen Winkels Einrasten empfunden wird.

4. Spreizsitz-Fahrzeug (1) nach einem der Ansprüche 1 bis 3, wobei bei dem Dreh-Körper (41) eine Breite (W) der Betätigungs-Fläche (43) in einer Richtung der sich in der Längsrichtung des einen der Griff-Abschnitte erstreckenden Achse (Cr) kleiner ist als eine Länge (L) des zu der Außenseite der Verkleidung (30) freiliegenden Teils der Betätigungs-Fläche (43) in einer Richtung im rechten Winkel zu der Breite (W), gesehen in einer Richtung im rechten Winkel zu einer Ebene, die beide Umfangs-Enden des zu der Außenseite der Verkleidung (30) freiliegenden Teils der Betätigungs-Fläche (43) direkt verbindet.

5. Spreizsitz-Fahrzeug (1) nach einem der Ansprüche 1 bis 4, wobei:
eine gesamte Außenumfangs-Fläche des Dreh-Körpers (41) die Betätigungs-Fläche (43) bildet; und
wenigstens ein Teil jeder beider End-Flächen des Dreh-Körpers (41), die jeweils die Längsrichtung des einen der Griff-Abschnitte kreuzen, zu der Außenseite der Verkleidung (30) freiliegt.

6. Spreizsitz-Fahrzeug (1) nach einem der Ansprüche 1 bis 5, wobei der Dreh-Körper (41) in einer Richtung im rechten Winkel zu der Längsrichtung des einen der Griff-Abschnitte an der Lenker-Einheit (7) entlang angeordnet ist.

7. Spreizsitz-Fahrzeug (1) nach einem der Ansprüche 1 bis 6, wobei:
die Betätigungs-Fläche (43) des Dreh-Körpers (41) eine unebene Fläche ist, an der Vertiefungen (44) und Vorsprünge einander abwechselnd in einer Schwenk-Richtung angeordnet sind, in der der Daumen der den einen der Griff-Abschnitte ergreifenden Hand geschwenkt wird; und
eine Öffnungsbreite jeder Vertiefung (44) in der Schwenk-Richtung so eingerichtet ist, dass ein Rand der Vertiefung (44) mit dem Daumen der den einen der Griff-Abschnitte ergreifenden Hand gedrückt werden kann.

8. Spreizsitz-Fahrzeug (1) nach Anspruch 7, wobei eine Vielzahl kleiner Vertiefungen, deren Öffnungsbreite jeweils kleiner ist als die jeder der Vertiefungen (44), an der Betätigungs-Fläche (43) des Dreh-Körpers (41) ausgebildet ist.

9. Spreizsitz-Fahrzeug (1) nach einem der Ansprüche 1 bis 8, wobei der Dreh-Körper (41) so ausgeführt ist, dass er betätigt werden kann, indem der Dreh-Körper (41) mit dem Daumen der den einen der Griff-Abschnitte ergreifenden Hand in einer vorgegebenen Richtung im rechten Winkel zu der sich in der Längsrichtung des einen der Griff-Abschnitte erstreckenden Achse (Cr) gedrückt wird.

10. Spreizsitz-Fahrzeug (1) nach einem der Ansprüche 1 bis 9, wobei der zu der Außenseite der Verkleidung (30) freiliegende Teil der Betätigungs-Fläche (43) hinter einer Mittelachse des einen der Griff-Abschnitte positioniert ist, wenn davon ausgegangen wird, dass eine nach hinten verlaufende Richtung eine Richtung von der Handflächenseite zu einem Nagel des Daumens der den einen der Griff-Abschnitte ergreifenden Hand ist, wenn der Daumen in der Längsrichtung des einen der Griffabschnitte ausgestreckt ist.

## Revendications

1. Véhicule de type à selle (1) comprenant :
une unité formant guidon (7) disposée en avant d'un siège (23) dans la direction avant arrière du véhicule, le siège (23) étant maintenu par un cadre (4) du véhicule,
un organe de préhension gauche (8b) et un organe de préhension droit (8a), disposés respectivement à l'extrémité gauche et à l'extrémité droite de l'unité formant guidon (7), et
un dispositif d'entrée (12) prévu sur l'unité formant guidon (7), le dispositif d'entrée (12) étant configuré pour pouvoir être manoeuvré avec le côté palmaire du pouce d'une main saisissant l'un de l'organe de préhension gauche (8b) et de l'organe de préhension droit (8a),
dans lequel le dispositif d'entrée (12) comprend :
un boîtier (30), et
un corps tournant (41) incluant une surface fonctionnelle (43) agencée dans la direction circonférentielle, une partie de ladite surface fonctionnelle (43) étant logée dans le boîtier (30) et une partie restante de ladite surface fonctionnelle (43) étant exposée vers l'extérieur du boîtier (30), le corps tournant (41) pouvant tourner autour d'un axe (Cr) se déployant dans la direction longitudinale de l'un correspondant des organes de préhension en faisant pivoter le pouce de la main saisissant ledit organe de préhension alors que le côté palmaire du pouce est en contact avec la partie de la surface fonctionnelle (43) qui est exposée vers l'extérieur du boîtier (30) ; **caractérisé en ce que** la surface fonctionnelle (43) s'étend de façon continue tout le long de la circonférence du corps tournant (41) sans interruption.

2. Véhicule de type à selle (1) selon la revendication 1, dans lequel le dispositif d'entrée (12) inclut une unité d'application de résistance (42a) configurée pour appliquer une résistance à la rotation du corps tournant (41).

3. Véhicule de type à selle (1) selon la revendication 2, dans lequel l'unité d'application de résistance (42a) est configurée pour augmenter ou diminuer la résistance appliquée au corps tournant (41) par rapport au sens de rotation du corps tournant (41) de sorte à ce qu'un ressenti de déclic soit apporté à une opération de rotation du corps tournant à des intervalles d'un angle prédéterminé.

4. Véhicule de type à selle (1) selon l'une quelconque des revendications 1 à 3, dans lequel, dans le corps tournant (41), la largeur (W) de la surface fonctionnelle (43) dans la direction de l'axe (Cr) se déployant dans la direction longitudinale de l'un des organes de préhension est inférieure à la longueur (L) de la partie de la surface fonctionnelle (43) qui est exposée vers l'extérieur du boîtier (30) dans une direction orthogonale à la largeur (W) lorsqu'il est visualisé depuis une direction orthogonale à un plan reliant directement les deux extrémités circonférentielle de la partie de la surface fonctionnelle (43) qui est exposée vers l'extérieur du boîtier (30).

5. Véhicule de type à selle (1) selon l'une quelconque des revendications 1 à 4, dans lequel :
la surface circonférentielle externe totale du corps tournant (41) forme la surface fonctionnelle (43), et
au moins une partie de chacune des deux surfaces terminales du corps tournant (41), chacune traversant la direction longitudinale dudit organe de préhension, est exposée vers l'extérieur du boîtier (30).

6. Véhicule de type à selle (1) selon l'une quelconque des revendications 1 à 5, dans lequel le corps tournant (41) est disposé le long de l'unité formant guidon (7) dans une direction orthogonale à la direction longitudinale dudit organe de préhension.

7. Véhicule de type à selle (1) selon l'une quelconque des revendications 1 à 6, dans lequel :
la surface fonctionnelle (43) du corps tournant (41) est une surface inégale sur laquelle sont agencés alternativement les uns avec les autres des évidements (44) et des protubérances dans une direction de balancement dans laquelle le pouce de la main saisissant ledit organe de préhension est basculé, et
la largeur de rainure de chaque évidement (44) dans la direction de balancement est conçue pour qu'un bord de l'évidement (44) soit poussé grâce au pouce de la main saisissant ledit organe de préhension.

8. Véhicule de type à selle (1) selon la revendication 7, dans lequel une pluralité de petits évidements, présentant chacun une largeur de rainure plus petite que celle de chacun des évidements (44) sont formés sur la surface fonctionnelle (43) du corps tournant (41).

9. Véhicule de type à selle (1) selon l'une quelconque des revendications 1 à 8, dans lequel le corps tournant (41) est configuré pour être manoeuvré en tournant le corps tournant (41) avec le pouce de la main saisissant ledit organe de préhension dans une direction prédéterminée orthogonale à l'axe (Cr) se déployant dans la direction longitudinale dudit organe de préhension.

10. Véhicule de type à selle (1) selon l'une quelconque des revendications 1 à 9, dans lequel la partie de la surface fonctionnelle (43) qui est exposée vers l'extérieur du boîtier (30) est positionnée en arrière de l'axe central dudit organe de préhension en supposant que la direction vers l'arrière est une direction partant du côté palmaire jusqu'à l'ongle du pouce de la main saisissant ledit organe de préhension, le pouce étant étendu dans la direction longitudinale dudit organe de préhension.
